Europäisches Patentamt

European Patent Office

Office européen des brevets

(19)

(11) Publication number: **0 107 385**
**A1**

# EUROPEAN PATENT APPLICATION

(12)

(21) Application number: **83305824.1**

(22) Date of filing: **28.09.83**

(51) Int. Cl.³: **C 01 B 33/28,** B 01 J 37/02, B 01 J 37/30

---

(30) Priority: **28.09.82 US 425361**

(43) Date of publication of application: **02.05.84**
**Bulletin 84/18**

(84) Designated Contracting States: **BE DE FR GB IT NL**

(71) Applicant: **MOBIL OIL CORPORATION, 150 East 42nd Street, New York New York 10017 (US)**

(72) Inventor: **Miale, Joseph Nicolas, 25 Merritt Drive, Lawrenceville New Jersey 08648 (US)**
Inventor: **Perkins, Patrick Danford, Wrick Avenue, Titusville New Jersey 08560 (US)**
Inventor: **Chang, Clarence Dayton, 11 Murray Place, Princeton New Jersey 08540 (US)**

(74) Representative: **West, Alan Harry, Mobil Court 3 Clements Inn, London WC2A 2EB (GB)**

---

(54) A method of producing a zeolite containing occluded multi-component metal oxides and the product of such a method.

(57) In a method of producing a zeolite containing occluded multimetalite, the zeolite is impregnated with a solution of metal salts in a liquid non-aqueous, inorganic solvent, preferably ammonia. After impregnation the zeolite is dried and calcined to yield a product exhibiting improved immobilization of the intrazeolitic metal components.

EP 0 107 385 A1

ACTORUM AG

## A METHOD OF PRODUCING A ZEOLITE CONTAINING OCCLUDED
## MULTIMETALITE AND THE PRODUCT OF SUCH A METHOD

This invention relates to a method of producing crystalline zeolites which are occluded with multimetalites. Such heterogeneous compositions have the ability to serve as catalysts in a wide range of hydrocarbon conversion reactions. The cracking activity of the subject zeolites may vary according to the composition of the multimetalite occluded therein.

Zeolitic materials, both natural and synthetic, have been demonstrated in the past to have catalytic properties for various types of hydrocarbon conversions. Certain zeolitic materials are ordered, porous crystalline aluminosilicates having a definite crystalline structure within which there are a large number of smaller cavities which may be interconnected by a number of still smaller channels. Since the dimensions of these pores are such as to admit for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three-dimensional framework $SiO_4$ and $AlO_4$ in which the tetrahedra are cross-linked by the sharing of oxygen atoms whereby the ratio of the total aluminum and silicon atoms to oxygen is 1:2. The spaces between the tetrahedra are occupied by molecules of water prior to dehydration. The electrovalence of the tetrahedra containing aluminum is balanced by the inclusion in the crystal of a cation, for example, an alkali metal or an alkaline earth metal cation. This can be expressed wherein the ratio of aluminum to the number of various cations, such as Ca/2, Sr/2, Na, K or Li is equal to unity. One type of cation may be exchanged either entirely or partially by another type of cation utilizing ion exchange techniques in a conventional manner. By means of such cation exchange, it has been possible to vary the properties of a given aluminosilicate by suitable selection of the cation.

Heterogeneous catalytic compositions are known which comprise a zeolite having a metal or metal compound impregnated within the zeolite. The intrazeolite metal or metal compound exhibits catalytic activity when dispersed within the intracrystalline spaces of the zeolite. Examples of such impregnated zeolites and methods for producing them are disclosed in U.S. Patent No. 3,344,058, U.S. Patent No. 3,373,109 and U.S. Patent No. 3,509,042. These prior art methods of incorporating metals or metal compounds generally involve introducing a water soluble metal compound into a zeolite forming mixture prior to crystallization of the zeolite. The resulting wet metal-containing crystalline zeolite is thereafter dried and subsequently subjected to a thermal treatment, preferably in hydrogen. The finished catalyst contains the metal component distributed in the zeolitic structure in metallic form.

Zeolites which are occluded with metals according to the above-described conventional methods are subject to substantial limitations. In particular, occluded metals of such zeolites may not be adequately anchored within the zeolite channels. Under the severe conditions of temperature and pressure encountered in catalysis, occluded metals migrate from the zeolite channels to the zeolite surface. A reducing atmosphere or the presence of hydrocarbon exacerbates this migration.

Accordingly, there is a need for materials which exhibit the catalytic characteristics of free metals or metal compounds when occluded within zeolites which are not susceptible to migration from the zeolite channels under catalytic reaction conditions. Alloys having reduced vapor pressures have been suggested as free metal substitutes. In particular, multimetalites such as those disclosed in U.S. Patent No. 3,752,776 to Chester et al. have been investigated in this regard.

Multimetalites are a class of inorganic materials having the ability to serve as catalysts in a wide range of hydrocarbon conversion reactions. The empirical formula of these compounds can be written:

$$Mx_1 \; Mx_2 \; Mx_3 \; . \; . \; . \; Mx_n \; Oy$$

where $Mx_1$, $Mx_2$, $Mx_3$ and $Mx_n$ are catalytically active metals.
The subscripts of the various symbols should reflect the empirical
composition using the Law of Definite Proportions, i.e., the smallest
whole numbers.

U.S. Patent No. 3,752,776 to Chester et al. discloses a method
for preparing multimetalite catalysts by thermally decomposing inorganic
compounds known as heteropoly amines which comprise a transition metal
complex and a heteropoly anion. These compounds can be represented by
the general empirical formula:

$$[ML_N]_{m/n} \; [M'_x M''_y O_z]$$

where  M  =  a transition metal or a mixture of a transition metal with
hydrogen

N  =  the number of ligands

$L_N$ =  a set of N ligands at least one of which functions as a
reducing agent

m  =  the charge on the anion

n  =  the charge on the cation

M'  =  a transition metal or non-metal or hydrogen

M''  =  a metal selected from the group consisting of Group V-B and
VI-B metals

x is 1 or 2

y is between 5 and 20

z is between 20 and 50

Thermal decomposition of these compounds produce multimetalites
and materials which can be represented by the following formula:

$$M_{m/n} \; M'_x \; M''_y \; O_w$$

where M is derived from the cation of a compound of the above type wherein said cation is hydrogen, or a transition metal or mixture thereof with each other, M' is a metal or a non-metal and M" is derived from the metal which is represented by M" in the parent compound and w is a number representing the number of oxygen atoms and is less than z noted hereinbefore. Generally at least two of M, M' and M" differ from each other. For purposes of illustration the products of the thermal decomposition of the compounds:

$$[CO(NH_3)6] [MMo_6O_{24}H_6] \times H_2O$$

where M = Co, Fe, Cr and Al should be written as follows:

$$CoCoMo_6O_{19}$$
$$CoFeMo_6O_{19}$$
$$CoCrMo_6O_{19}$$
$$CoAlMo_6O_{19}$$

In addition to the above-described heteropoly amine precursors, multimetalites can also be derived from a mixture of metal salts and/or metal oxides said mixture containing at least two different metal components and exhibiting catalytic activity when incorporated within a zeolite.

Suitable metal components include one or more of the metals of Groups Ia, Ib, IIa, IIb, IIIa, IV, V, VI, VII and VIII of the Periodic Table. Representative of these metals are copper, zinc, rare earths, actinium, titanium, tin, molybdenum, chromium, tungsten, iron, vanadium, cobalt, nickel, manganese, and metals of the platinum group, i.e., platinium, palladium, osmium, rhodium, ruthenium and iridium as well as combinations of these metals, their salts, oxides or sulfides. Representative of the anion of the catalytically active metal salts which can be employed to base exchange the aluminosilicates include chlorides, bromides, iodides, carbonates, bicarbonates, sulfates, sulfides, thiocyanates, dithiocarbonates, peroxysulfates, acetates, benzoates, oxalates, citrates, fluorides, nitrates, nitrites, formates, etc. The preferred salts are chlorides, nitrates, sulfates and acetates.

A preferred group of metal components are those selected from Group VIII of the Periodic Table, such as cobalt, nickel and the platinum series, which are particularly useful in hydrogenation/-dehydrogenation and hydrocracking reactions.

The amount of catalytically active metal components encased within the crystalline structure of the aluminosilicate may vary widely and will depend upon the charge stock undergoing conversion as well as on the particular nature of the metal component. Generally, the amount of each metal component will be within the range of .05 to 20 percent by weight. When a metal of the platinum series is employed, the amount thereof will generally range from .05 to 5 weight percent. With other metal components such as molybdenum, cobalt, tungsten, chromium, iron, vanadium, and nickel, the amounts employed will generally be within the range of .05 to 20 weight percent, it being understood that in any instance, the amount of metal component will be such as to afford selective conversion of the portion of the charge mixture making contact with the active catalytic surfaces and undergoing conversion.

Multimetalites have been found to catalyze a wide variety of reactions, such as hydrogenation, dehydrogenation, isomerization, hydrogenolysis, combustion of carbon monoxide, decomposition of nitric oxide, cracking and hydrocracking of hydrocarbons, reforming, aromatization, dehydrocyclization, alkylation, hydrodesulfurization, denitrogenation, disproportionation, carbonylation, hydroformylation, polymerization and nitrogen fixation. They can be used as catalysts by themselves, in conjunction with supports such as alumina, silica, clay and the like and can also be treated with hydrogen to improve their catalytic capabilities. However, conventional techniques for impregnating zeolites with aqueous solutions of multimetalite precursors have not been successful.

According to the invention, there is provided in one aspect a method for producing a zeolite material containing occluded multimetalite which comprises combining a starting zeolite material, a multimetalite precursor, and a liquid, predominantly non-aqueous inorganic solvent for the precursor to produce a zeolite which is impregnated by the multimetalite precursor; drying the impregnated
zeolite material to remove the solvent; and calcining the resulting
dried zeolite to convert the occluded multimetalite precursor to
occluded multimetalite.

In a further aspect, the invention resides in a zeolite
material containing occluded multimetalite prepared by impregnating a
zeolite with a multimetalite precursor dissolved in a liquid,
predominantly non-aqueous inorganic solvent, drying the multimetalite
precursor impregnated product to remove the solvent, and calcining the
dried product to convert multimetalite precursor to multimetalite.

The resulting metal-containing zeolite comprises immobilized
intrazeolitic metal components which resist migration from the zeolite
interior even under severe conditions.

The crystalline aluminosilicate zeolite material used herein
have unusually low alumina contents, i.e., high silica to alumina mole
ratios, such that they are very active even when the silica to alumina
mole ratio exceeds 30.  Such activity is surprising, since catalytic
activity is generally attributed to framework aluminum atoms and/or
cations associated with these aluminum atoms.  These zeolites retain
their crystallinity for long periods in spite of the presence of steam
at high temperatures which induces irreversible collapse of the
framework of other zeolites, e.g., of the X and A type.  Furthermore,
carbonaceous deposits, when formed, may be removed by burning at higher
than usual temperatures to restore activity.  These zeolites, used as
catalysts, generally have low coke-forming activity and therefore are
conducive to long times on stream between regenerations by burning
carbonaceous deposits with oxygen- containing gas such as air.

An important characteristic of the crystal structure of this
particular class of zeolites is that it provides a selective constrained
access to and egress from the intracrystalline free space by virtue of
having an effective pore size intermediate between the small pore Linda
A and the large pore Linde X, i.e., the pore windows of the structure
are of about a size such as would be provided by 10-membered rings of
silicon atoms interconnected by oxygen atoms.  It is to be understood,
of course, that these rings are those formed by the regular disposition of the tetrahedra making up the anionic framework of the crystalline zeolite, the oxygen atoms themselves being bonded to the silicon or aluminum atoms at the centers of the tetrahedra. Briefly, the preferred type zeolites useful in this invention possess, in combination: a silica to alumina mole ratio of at least about 12; and a structure providing constrained access to the intracrystalline free space.

The silica to alumina mole ratio referred to may be determined by conventional analysis. This ratio is meant to represent, as closely as possible, the ratio in the rigid anionic framework of the zeolite crystal and to exclude aluminum in the binder or in cationic or other form within the channels. Although zeolites with a silica to alumina mole ratio of at least 12 are useful, it is preferred in some instances to use zeolites having substantially higher silica/alumina ratios, e.g., 70 and above or even 1600 and above. In addition, zeolites as otherwise characterized herein but which are substantially free of aluminum, that is zeolites having silica to alumina mole ratios of up to infinity, are found to be useful and even preferable in some instances. Such "high silica" or "highly siliceous" zeolites are intended to be included within this description.

Members of this particular class of zeolites, after activation, acquire an intracrystalline sorption capacity for normal hexane which is greater than that for water, i.e., they exhibit "hydrophobic" properties. This hydrophobic character can be used to advantage in some applications.

The zeolites of the particular class useful herein have an effective pore size such as to freely sorb normal hexane. In addition, their structure must provide constrained access to larger molecules. It is sometimes possible to judge from a known crystal structure whether such constrained access exists. For example, if the only pore windows in a crystal are formed by 8-membered rings of silicon and aluminum atoms, then access by molecules of larger cross-section than normal hexane is excluded and the zeolite is not of the desired type. Windows of 10-membered rings are preferred, although in some instances excessive puckering of the rings or pore blockage may render these zeolites ineffective.  Twelve-membered rings usually do not offer sufficient
constraint to produce the advantageous conversions, although the
puckered 12-ring structure of TMA offretite shows constrained access.
Other 12-ring structures may exist which may be operative.

Rather than attempt to judge from crystal structure whether or
not a zeolite possesses the necessary constrained access to molecules of
larger cross-section than normal paraffins, a simple determination of
the "Constraint Index" may be used.  The meaning of Constraint Index and
its method of determination are fully decribed in, for example, U.S.
Patent No. 3,905,915.

The preferred class of zeolites used herein includes zeolite
beta, ZSM-5, ZSM-5/ZSM-11 intermediates, ZSM-11, ZSM-12, ZSM-23, ZSM-35,
ZSM-38, ZSM-48 and other similar materials.  ZSM-5 is particularly
preferred.

Zeolite beta is described in U.S. Patent No. 3,308,069.  ZSM-5
is described in greater detail in U.S. Patent Nos. 3,702,886 and Re
29,948.  ZSM-5/ZSM-11 intermediate compositions are described in U.S.
Patent No. 4,229,424.  ZSM-11 is described in U.S. Patent No.
3,709,979.  ZSM-12 is described in U.S. Patent No. 3,832,449.  ZSM-23 is
described in U.S. Patent No. 4,076,842.  ZSM-35 is described in U.S.
Patent No. 4,016,245.  ZSM-38 is more particularly described in U.S.
Patent No. 4,046,859.  ZSM-48 is more particularly described in European
Patent Publication No. 0015132.

The specific zeolites described, when prepared in the presence
of organic cations, are substantially catalytically inactive, possibly
because the intracrystalline free space is occupied by organic cations
from the forming solution.  They may be activated by heating in an inert
atmosphere at 540°C for one hour, for example, followed by base exchange
with ammonium salts followed by calcination at 540°C in air.  The
presence of organic cations in the forming solution may not be
absolutely essential to the formation of this type zeolite; however, the
presence of these cations does appear to favor the formation of this
special class of zeolite.  More generally, it is desirable to activate
this type catalyst by base exchange with ammonium salts followed by
calcination in air at 540°C for from 15 minutes to about 24 hours.

Natural zeolites may sometimes be converted to zeolite
structures of the class herein identified by various activation
procedures and other treatments such as base exchange, steaming, alumina
extraction and calcination, alone or in combinations.  Natural minerals
which may be so treated include ferrierite, brewsterite, stilbite,
dachiardite, epistilbite, heulandite, and clinoptilolite.

In a preferred aspect of this invention, the zeolites hereof
are selected as those providing among other things a crystal framework
density, in the dry hydrogen form, of not less than about 1.6 grams per
cubic centimeter.  The dry density for known structures may be
calculated from the number of silicon plus aluminum atoms per 1000 cubic
Angstroms, as described on page 19 of the article "Zeolite Structure" by
W.M. Meier, included in Proceedings of the Conference on Molecular
Sieves, (London, April, 1967) published by the Society of Chemical
Industry, London, 1968.

When the crystal structure is unknown, the crystal framework
density may be determined by classical pycnometer techniques.  For
example, it may be determined by immersing the dry hydrogen form of the
zeolite in an organic solvent which is not sorbed by the crystal.  Or,
the crystal density may be determined by mercury porosimetry, since
mercury will fill the interstices between crystals but will not
penetrate the intracrystalline free space.

Multimetalite precursors suited for occlusion in the zeolite
compositions of the present invention include the metal amine heteropoly
salts described in U.S. Patent No. 3,752,776.  Multimetalite precursors
may also include a mixture of metal salts and/or metal oxides, said
mixture containing at least two different metal species, such precursors
being described in greater detail above.  The metal species of the
multimetalites derived from these precursors exhibit catalytic activity
when occluded or incorporated within a zeolite.

Metal salts suitable for inclusion in multimetalite precursors
include metal chlorides and metal nitrates as well as ammonium metal
oxides.  Preferred metal salts include hydrated metal nitrates such as
$Zn(NO_3) \cdot 6H_2O$, $Al(NO_3)_3 \cdot 9H_2O$, $Cr(NO_3)_3 \cdot 9H_2O$, $Ce(NO_3)_3 \cdot 9H_2O$,

and $Co(NO_3)_2 \cdot 6H_2O$. Metal oxides or metal chlorides such as $MoO_3$ and $GaCl_3$ may supplement or replace metal salts in a multimetalite precursor.

The multimetalite precursors are introduced within the zeolite by dissolving the precursors in a liquid, non-aqueous, inorganic solvent, and preferably an ammonia solvent and contacting the zeolite with the multimetalite solution. The ammonia solvent can be anhydrous liquid ammonia or ammonia mixed with less than about 50 weight percent water. Other suitable solvents include liquid $SO_2$. A HZSM-5 zeolite suitable for use in the present invention can be prepared from low sodium ZSM-5 which has been calcined in an inert atmosphere to drive off any organic template ions remaining after synthesis. The calcined zeolite can then be activated by heating in air.

In one embodiment of the present invention, the activated HZSM-5 is combined with all the components of the multimetalite precursors, e.g., a mixture of hydrated metal nitrates, such as $Zn(NO_3) \cdot 6H_2O$ and $Al(NO_3)_3 \cdot 9H_2O$. The ammonia solvent can then be added to the zeolite-multimetalite precursor mixture. Addition of the ammonia solvent dissolves the multimetalite precursor and the resulting solution permeates the zeolite structure resulting in intrazeolite occlusion of the multimetalite precursors. The zeolite is then heated under generally mild temperatures ranging from room temperature to 200 °C, preferably 110 to 150 °C, say 130°C, in order to drive off the ammonia solvent. The resulting dried composition is then calcined at temperatures ranging from 250 to 650°C, preferably 300 to 500°C, say 350°C, for periods ranging from 0.5 to 24 hours, preferably 1 to 4 hours. Such calcining converts the multimetalite precursors to multimetalites, resulting in zeolite compositions containing virtually immobilized occluded multimetalites.

Alternative embodiments include the addition of an ammonia solvent-multimetalite precursor solution to the dried zeolite or alternatively the addition of an ammonia solvent-zeolite mixture to the multimetalite precursors.

In another embodiment, each metal species of the multimetalite is independently incorporated and calcined within the zeolite composition. For example, a single hydrated metal hydrate is introduced within the zeolite by an ammonia solvent. The resulting composite is dried and calcined and another metal salt is subsequently introduced in a similar fashion. The precursor occluded zeolite is then calcined to form a multimetalite occluded zeolite. Additional metal species may be occluded in the same zeolite by continuing this serial incorporation procedure.

The composition of the resultant multimetalite occluded zeolite can be expressed with respect to its metal species by the following atomic ratio of metal species formula:

$$M_1 : M_2 : M_n : Al_{Fr}$$

where $M_1$, $M_2$ and $M_n$ each represent the number of moles the particular metal species occluded within the zeolite, and $Al_{Fr}$ represents the number of moles of framework aluminum present in the zeolite. Where $Al_{Fr} = 1$, $M_1$, $M_2$ and $M_n$ can range anywhere from 0.1 to essentially infinity, preferably 0.5 to 1000. Examples of zeolite compositions and their corresponding atomic ratios are given in Table I. In general, suitable amounts of each metal species added to a zeolite of the present invention can vary according to the particular selectivity and activity desired in the final multimetalite-occluded product.

The following examples illustrate the preparation of multimetalite occluded zeolites and the use of such products as catalysts.

## Example 1

A sample of low sodium ZSM-5 ($SiO_2/Al_2O_3 = 65$) was calcined at 1000°F for one hour in helium followed by one hour in air to burn off the organic template ions. An aliquot was heated in air for 30 minutes and tested for hexane cracking capability ($\alpha$). Results are shown in Table I.

### Example 2

A 6-gram aliquot of HZSM-5 from Example 1 was mixed with 0.86 g Zn(NO$_3$) $\cdot$ 6H$_2$O and 1.13 g Al(NO$_3$)$_3$ $\cdot$ 9H$_2$O (Zn:Al:Al$_{Fr}$ = 1:1:1). Liquid ammonia was added slowly with constant stirring until the catalyst was covered with free liquid. The ammonia was allowed to evaporate. Weathering was completed at 130°C. An aliquot was tested for hexane cracking activity ($\alpha$). See Table I.

### Example 3

A 6-gram aliquot of HZSM-5 from Example 1 was treated as in Example 2 except that the amount of Al(NO$_3$)$_3$ $\cdot$ 9H$_2$O was doubled (Zn:Al:Al$_{Fr}$ = 1:2:1). See Table I.

### Example 4

A 6-gram aliquot of HZSM-5 from Example 1 was treated as in Example 2 but replacing the zinc salt with Cr(NO$_3$)$_3$ $\cdot$ 9H$_2$O (Cr:Al:Al$_{Fr}$ = 1:1:1). A sample was tested for hexane cracking ($\alpha$) and Constraint Index. See Table I.

### Example 5

A 3-gram sample of HZSM-5 from Example 1 was treated as in Example 2 except that an equiatomic amount of chromium as Cr(NO$_3$)$_3$ $\cdot$ 9H$_2$O was included with the added salts. See Table I.

### Example 6

Preparation as in Example 5 was repeated except that the salts were added individually with calcination for 20 minutes at 538°C following each salt incorporation, i.e. incorporation of Cr(NO$_3$)$_3$ $\cdot$ 9H$_2$O followed by calcination; incorporation of Al(NO$_3$)$_3$ $\cdot$ 9H$_2$O followed by calcination; incorporation of Zn(NO$_3$)$_2$ $\cdot$ 6H$_2$O followed by calcination. See Table I.

0107385

## Example 7

Preparation as in Example 3 except that the amounts of zinc and aluminum nitrates were doubled (Al:Zn:Al$_{Fr}$ = 4:2:1).  See Table I.

## Example 8

Preparation as in Example 2 except that equiatomic amount of cerium as Ce(NO$_3$)$_3$ $\cdot$ 9H$_2$O was substituted in place of Zn(NO$_3$)$_2$ $\cdot$ 6H$_2$O.
See Table I.

## Example 9

Preparation as in Example 8 except that vanadium in the form of as NH$_4$VO$_3$ was substituted for the cerium salt.  See Table I.

## Example 10

Preparation as in Example 2 except that 10 weight percent MoO$_3$ was substituted in place of the zinc and aluminum nitrates.  See Table I.

## Example 11

Product of Example 10 with added 3 percent CoO as Co(NO$_3$)$_2$ $\cdot$ 6H$_2$O, processed with liquid NH$_3$ as in Example 2.  See Table I.

## Example 12

The catalyst of Example 2 was calcined at 400°C in air for two hours.  It was then pressed into 1/8-inch (0.32 cm) pellets and sized to 14/30 mesh.  An aliquot (2.7 g, 6.0 cc catalyst volume) was exposed to propane (1.1 WHSV) at 1000°F (538°C), one atmosphere pressure (101 kPa), and yielded the products shown in Table II.  BTX selectivity of 28.7 percent was achieved at 89.4 percent propane conversion.

## Example 13

The catalyst prepared in Example 3 was treated as in Example 12 except that the temperature of reaction was 1100°F (593°C).  Data (Table II) indicate propane conversion of 92.5 percent and BTX selectivity of 37.0 percent.

### Example 14

The catalyst prepared in Example 5 was treated as in Example 12. Pertinent data are presented in Table II. Propane conversion of 73.9 percent and BTX selectivity of 33.7 percent were achieved.

### Example 15

A 3-gram sample of high silica ZSM-5 (26,000 $SiO_2/Al_2O_3$; = 0.015) was mixed with 0.56 g. $Al(NO_3)_3 \cdot 9H_2O$ and 0.2 g $GaCl_3$. The mixture was treated with liquid ammonia as in Example 2. An aliquot was calcined at 538°C and tested for hexane cracking. See Table I.

### Example 16

A 6-gram aliquot of HZSM-5 from Example 1 was mixed with 0.86 g. $Zn(NO_3) \cdot 6H_2O$ and 1.13 g. $Al(NO_3)_3 \cdot 9H_2O$ ($Zn:Al:Al_{Fr}$ = 1:1:1). Concentrated ammonium hydroxide solution containing 28 weight percent ammonia in water was added slowly with constant stirring until the catalyst was covered with free liquid. The ammonia was allowed to evaporate. Weathering was completed at 130°C.

## TABLE I

### CATALYST EVALUATION

| Example | Description $M_1:M_2:Al_{Fr}$ | (Atomic Ratio) | $\alpha$ | Constraint Index |
|---------|------------------------------|----------------|----------|------------------|
| 1 | Starting HZSM-5 | | 215 | 6 |
| 2 | AlZnZSM-5 | (1:1:1) | 670 | |
| 3 | $Al_2ZnZSM-5$ | (2:1:1) | 750 | |
| 4 | CrAlZSM-5 | (1:1:1) | 117 | 5.4 |
| 5 | CrAlZnZSM-5 | (1:1:1:1) | 930 | |
| 6 | CrAlZnZSM-5-Calcination | (1:1:1:1) | 1240 | |
| 7 | $Al_4Zn_2ZSM-5$ | (4:2:1) | 1200 | |
| 8 | CeAlZSM-5 | (1:1:1) | 183 | 1.8 |
| 9 | VAlZSM-5 | (1:1:1) | 225 | 5.5 |
| 10 | MoZSM-5 | (0.93:1) | 172 | |
| 11 | CoMoZSM-5 | (0.8:0.93:1) | 84 | 2.6 |
| 15 | AlGaZSM-5 | (400:400:1) | 1.3 | |

## TABLE II

| Example | 12 | 13 | 14 |
|---|---|---|---|
| Catalyst from Example | 2 | 3 | 5 |
| Catalyst Description | AlZnZSM-5 (1:1:1) | Al$_2$ZnZSM-5 (2:1:1) | CrAlZnZSM-5 (1:1:1:1) |
| Temperature, °F (°C) | 1000 (538) | 1100 (593) | 1000 (538) |
| Pressure, atm. (kPa) | 1 (101) | 1 (101) | 1 (101) |
| WHSV propane | 1.1 | 1.1 | 1.1 |
| Selectivity, wt. % | | | |
| Hydrogen | 2.5 | 3.4 | 3.1 |
| Methane | 18.8 | 16.6 | 17.3 |
| Ethane | 43.2 | 32.3 | 36.3 |
| n-Butane | .1 | .1 | .5 |
| i-Butane | .1 | trace | .2 |
| n-Pentane | -- | trace | -- |
| i-Pentane | -- | trace | -- |
| Ethylene | .5 | 1.3 | .5 |
| Propylene | .9 | 1.9 | 2.2 |
| C$_4$ Olefins | .1 | -- | .1 |
| Benzene | 11.3 | 16.8 | 13.2 |
| Toluene | 11.9 | 15.5 | 14.2 |
| m, p-Xylene + ethylbenzene | 4.3 | 3.6 | 4.9 |
| o-Xylene | 1.2 | 1.1 | 1.4 |
| C$_9$ aromatics | .9 | 1.1 | 1.1 |
| C$_{10}$ aromatics | 4.2 | 6.1 | 4.9 |
| % BTX in products | 28.7 | 37.0 | 33.7 |
| Propane conversion % | 89.4 | 92.1 | 98.6 |

CLAIMS:

1.    A method for producing a zeolite material containing occluded multimetalite which comprises combining a starting zeolite material, a multimetalite precursor, and a nitrogenous solvent for the precursor to produce a zeolite which is impregnated by the multimetalite precursor; drying the impregnated zeolite material to remove the solvent; and calcining the resulting dried zeolite to convert the occluded multimetalite precursor to occluded multimetalite.

2.    The method of claim 1 wherein said starting zeolite material is selected from zeolite beta, ZSM-5, ZSM-5/ZSM-11 intermediates, ZSM-11, ZSM-12, ZSM-23, ZSM-35, ZSM-38 and ZSM-48.

3.    The method of claim 1 wherein said multimetalite precursor comprises a metal amine heteropoly salt of the general empirical formula:

$$[ML_N]_{m/n} [M'_xM''_yO_z]$$

where   M  =  a transition metal or a mixture of a transition metal with hydrogen

N  =  the number of ligands

$L_N$ =  a set of N ligands at least one of which functions as a reducing agent

m  =  the charge on the anion

n  =  the charge on the cation

M'  =  a transition metal or non-metal or hydrogen

M"  =  a metal selected from Group V-B and VI-B metals

x is 1 or 2

y is between 5 and 20

z is between 20 and 50

4.    The method of claim 1 wherein said multimetalite precursor comprises at least two components selected from the group consisting of metal salts and metal oxides wherein each component contains a different metal species.

5.    The method of claim 1 wherein the solvent is ammonia.

6.    The method of claim 5 wherein the ammonia is anhydrous liquid ammonia.

7.    A zeolite material containing occluded multimetalite prepared by impregnating a zeolite with a multimetalite precursor dissolved in a nitrogenous solvent, drying the multimetalite precursor impregnated product to remove the solvent, and calcining the dried product to convert multimetalite precursor to multimetalite.

1648H

European Patent Office

**EUROPEAN SEARCH REPORT**

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| D,Y | US-A-3 752 776 (A.W. CHESTER et al.)<br>* Column 1, lines 12-37 *<br>--- | 1,3-7 | C 01 B 33/28<br>B 01 J 37/02<br>B 01 J 37/30 |
| Y | Chemical Abstracts vol. 93, no. 20, 17 November 1980, Columbus, Ohio, USA J. FOURNIER et al. "Preparation of nickel X zeolite from synthetic NaX in liquid ammonia. Reduction by molecular hydrogen", page 406, column 1, abstract no. 192657j<br>& C. R. Seances Acad. Sci., Ser. C, vol. 291, no. 1, 1980, pages 5-8<br>--- | 1,3-7 | |
| D,A | US-A-3 344 058 (J.N. MIALE)<br>--- | | |
| D,A | US-A-3 373 109 (V.J. FRILETTE et al.)<br>--- | | TECHNICAL FIELDS SEARCHED (Int. Cl. ³)<br><br>C 01 B 33/28<br>B 01 J 20/00<br>B 01 J 37/00<br>B 01 J 29/06 |
| D,A | US-A-3 509 042 (J.N. MIALE)<br>----- | | |

The present search report has been drawn up for all claims

| Place of search<br>BERLIN | Date of completion of the search<br>28-12-1983 | Examiner<br>KESTEN W |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document